# EUROPÄISCHE PATENTANMELDUNG

(11) **EP 0 874 434 A2**
(43) Veröffentlichungstag der Anmeldung: **28.10.1998**
(21) Anmeldenummer: 98106770.5
(22) Anmeldetag: 14.04.1998
(51) Int. Cl.: H02B 1/30, H02B 1/01

(54) **Einrichtung zum gegeneinander Verspannen von Rahmenprofilen**

(30) Priorität: 24.04.1997 CH 960/97
(71) Anmelder: WISAR, Wyser + Anliker AG, 8302 Kloten (CH)
(72) Erfinder: Schnelli, Fridolin, 8424 Embrach (CH)
(74) Vertreter: Troesch Scheidegger Werner AG

(57) **Zusammenfassung**

Die Einrichtung zum gegeneinander Verspannen von Rahmenprofilen aneinander grenzender Kastenrahmen umfasst zwei Grundelemente (1,2), welche an den beiden zu verbindenden Rahmenprofilen (4,6) festzuschrauben sind. Zwischen dem ersten Grundelement (1) und einer seitlich abstehenden Abkröpfung (3) des zweiten Grundelementes (2) sind bei der Montage gegeneinander anliegende Anschlagschrägen (3',3'') vorgesehen, welche beim Anziehen von Schrauben (11) die Rahmenprofile (4,6) zueinander ausrichten und gegeneinander anlegen.

## Beschreibung

Die vorliegende Erfindung betrifft eine Einrichtung zum gegeneinander Verspannen von zwei aneinander angrenzenden Rahmenprofilen, bestehend aus zwei am ersten bzw. zweiten der Profile zu befestigenden Grundelementen, bzw. eine Verbindung zwischen Rahmenprofilen von zwei zueinander ausgerichteten, nebeneinander stehenden, aus Rahmenprofilen aufgebauten Kasten, mittels mindestens einer solchen Einrichtung.

Elektrische Schaltanlagen und Verteileinrichtungen werden in der Regel heute in Kästen untergebracht, deren Grundaufbau eine Vielzahl von Einbaumöglichkeiten bzw. - varianten erlaubt. Diese Kästen weisen ein Grundskelett aus sog. Profilrahmen auf, deren Seitenflächen mit Abdeckplatten garniert werden.

In letzter Zeit hat sich das Bedürfnis gezeigt, je nach Anlage und Bedarf ggf. eine Mehrzahl von Montagekästen zueinander ausgerichtet nebeneinander anzuordnen und diese Kästen gegeneinander zu verspannen (ggf. unter Zwischenlage von Abschirmungen). Die Verbindung benachbarter Kästen stösst zumindest im Bereich der hintenliegenden Rahmenprofile auf montagetechnische Schwierigkeiten, und ein sicheres gegenseitiges Verspannen angrenzender Rahmenprofile kann ohne grösseren zeitlichen Aufwand nicht mehr gewährleistet werden.

Aufgabe der vorliegenden Erfindung ist nun die Schaffung einer einfach zu bedienenden Einrichtung zum gegeneinander Verspannen aneinander angrenzender Profile bzw. eine Rahmenprofilverbindung mittels solcher Einrichtungen.

Diese Aufgabe wird bei einer Einrichtung der eingangs definierten Art mittels zwei Grundelementen gemäss dem kennzeichnenden Teil von Anspruch 1 gelöst.

Eine Verbindung zwischen Rahmenprofilen mittels solcher Verspanneinrichtungen ist im kennzeichnenden Teil von Anspruch 2 definiert.

Besondere Ausführungsformen der Erfindung sind in den abhängigen Ansprüchen beschrieben.

Die Erfindung wird nachstehend anhand eines in der Zeichnung dargestellten Ausführungsbeispiels noch etwas näher erläutert.
Es zeigen:
- Fig. 1: in schaubildlicher Darstellung eine Einrichtung zum gegeneinander Verspannen von zwei angrenzenden Rahmenprofilen;
- Fig. 2: eine Einrichtung nach Fig. 1, in draufsicht, montiert an zwei miteinander zu verbindenden Rahmenprofilen;
- Fig. 3: die Einrichtung nach Fig. 2 unmittelbar vor dem Zusammenfügen, und
- Fig. 4: zwei gegeneinander verspannte Kastenrahmen im fertigmontierten Zustand.

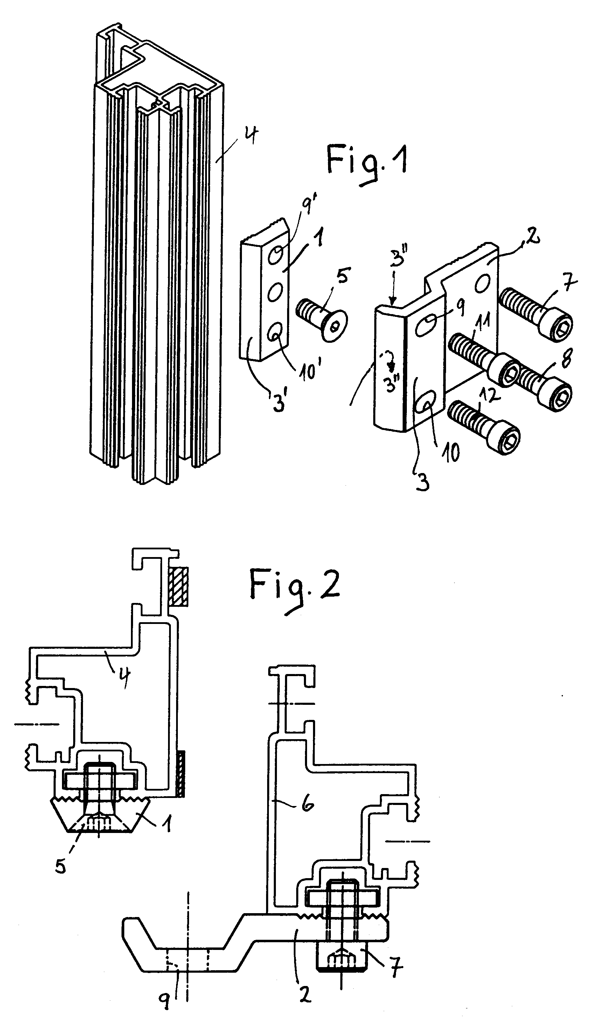

Fig. 1 der Zeichnung zeigt die aus zwei einfachen Grundelementen 1,2 bestehende Verspanneinrichtung. Das erste Grundelement 1 weist auf einer Seite (im montierten Zustand vom Grundelement 2 entfernteren Seite) eine geneigt verlaufende Anschlagfläche 3' auf.

Das zweite Grundelement 2 ist mit einer seitlich abstehenden Verlängerung in Form einer Abkröpfung 3 versehen. Der äussere Schenkel der Abkropfung 3 weist auf der Innenseite eine der Anschlagfläche 3' des Grundelementes 1 entsprechend geneigte Gegenanschlagfläche 3'' auf. Die Abkröpfung 3 ist dazu vorgesehen, in Wirklage (nach Montage) das erste Grundelement 1 zu übergreifen, wie nach stehend noch beschrieben wird.

Wie Fig. 2 zeigt, wird das Grundelement 1 an der gewünschten Stelle am Rahmenprofil 4 eines Kastenrahmens mittels einer ersten Schraube 5 festgeschraubt. Entsprechend wird das Grundelement 2 am Rahmenprofil 6 eines angrenzenden Kastenrahmens mittels Schrauben 7,8 angebracht, provisorisch festgeschraubt und so ausgerichtet, dass die Abkröpfung 3 mit zwei horizontal verlaufenden Langlöchern 9,10 das Grundelement 1 im fertig montierten Zustand wird, wobei die Langlöcher 9,10 zu zwei weiteren Bohrungen 9',10' im Grundelement 1 auszurichten sind (durch Verschiebungsmöglichkeit des noch nicht definitiv festgeschraubten Grundelementes 2).

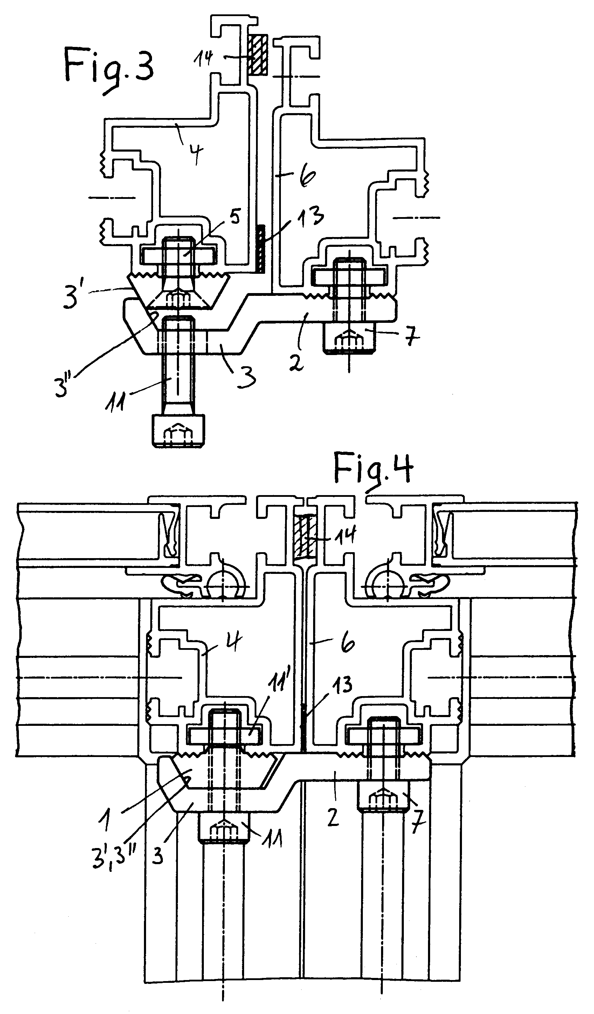

Fig. 3 zeigt die Einrichtung nach Fig. 2 direkt vor deren definitiver Montage : zwei weitere Schrauben 11,12 werden durch die Langlocher 9,10 und die Bohrungen 9',10' zu entsprechenden Schraubenmuttern 11',12' (nicht gezeigt) geführt und festgeschraubt. Dabei werden, mit den Anschlagflächen 3',3'' aufeinander gleitend, die Rahmenprofile 4,6 und damit auch die Zugehörigen Kastenrahmen gegeneinander gezogen und die Rahmenprofile 4,6 zueinander ausgerichtet fest miteinander verspannt (die Schrauben 7,8 sind dabei selbstverständlich definitiv festzuziehen).

Zwischen den Rahmenprofilen 4,6 können ggf. beliebige Dichtungen oder Abschirmungen 13,14 angeordnet werden.

Nach der Vormontage der Grundelemente 1,2 kann somit eine Verbindung zwischen benachbarten Kastenprofilen auf einfache Weise durch Einsetzen und Anziehen von wenigen Schrauben geschaffen werden. Dies ist auch von der Vorderseite (Tür) der Kästen problemlos möglich .

Beim gezeigten Beispiel weist das Grundelement 1 einen trapezförmigen Querschnitt auf. Entsprechend ausgebildet ist auch die Abkröpfung des Grundelementes 2. Wesentlich sind aber die beiden Anschlagschrägen 3',3'' der Grundelemente, wobei das vollständige Übergreifen des Grundelementes 1 durch die Abkröpfung 3 die Stabilität erhöhen kann.

## Patentansprüche

1. Einrichtung zum gegeneinander Verspannen von zwei aneinander angrenzenden Rahmenprofilen, bestehend aus zwei am ersten bzw. zweiten der Profile zu befestigenden Grundelementen, dadurch gekennzeichnet, dass das erste Grundelement mindestens auf der nach Montage dem zweiten Grundelement abgewandten Seite eine geneigt verlaufende Anschlagflache aufweist, und dass das zweite Grundelement eine seitlich abstehende Verlängerung in Form einer Abkröpfung aufweist, welche dazu vorgesehen ist, in Wirklage das erste Grundelement zu übergreifen, wobei deren äusserer Schenkel auf der Innenseite eine der Anschlagfläche des ersten Grundelementes entsprechend geneigte Gegenanschlagfläche aufweist.

2. Verbindung zwischen Rahmenprofilen von zwei zueinander ausgerichteten, nebeneinander stehenden, aus Rahmenprofilen aufgebauten Kästen, mittels mindestens einer Einrichtung nach Anspruch 1, dadurch gekennzeichnet, dass das erste Grundelement der Einrichtung, welches mittels Schraubverbindung vor dem Nutspalt einer Längsnut im einen Rahmenprofil angebracht bzw. anbringbar ist, mindestens auf der dem anderen Rahmenprofil abgewandten Seite eine geneigt verlaufende Anschlagfläche auf weist, dass das zweite Grundelement, welches mittels Schraubverbindung vor dem Nutspalt einer Längsnut im anderen Rahmenprofil angebracht bzw. anbringbar ist, eine seitlich abstehende Verlängerung in Form einer Abkröpfung aufweist, welche dazu vorgesehen ist, in Wirklage das erste Grundelement zu übergreifen, wobei deren äusserer Schenkel auf der Innenseite eine der Anschlagfläche des ersten Elements entsprechend geneigte Gegenanschlagfläche aufweist, und dass in der Abkröpfung des zweiten Grundelementes mindestens ein zu den Rahmenprofilen hin verlaufendes Langloch vorgesehen ist, durch welches eine Schraube hindurchführbar ist, welche durch eine Bohrung im ersten Element zu einer Schraubenmutter in der Längsnut des genannten einen Rahmenprofils fuhrt, derart, dass beim Anziehen dieser Schraube die beiden an den miteinander zu verbindenden Rahmenprofilen festgeschraubten Grundelemente gegeneinander gezogen werden und dabei durch den Ablauf über die Anschlagschrägen gleichzeitig die Kastenrahmen gegeneinander anlegen.

3. Einrichtung nach Anspruch 1 oder Anspruch 2, dadurch gekennzeichnet, dass das erste Grundelement im Querschnitt trapezförmig und die Abkröpfung am zweiten Grundelement entsprechend ausgebildet ist.

4. Einrichtung nach einem der Ansprüche 1 - 3, dadurch gekennzeichnet, dass zur Befestigung des ersten Grundelements am einen Rahmenprofil eine Schraube vorgesehen ist und dass zur Befestigung des zweiten Grundelementes am anderen Rahmenprofil und am ersten Rahmenprofil je zwei Schrauben vorgesehen sind.
